(19) Europäisches Patentamt
European Patent Office
Office européen des brevets

(11) **EP 2 974 929 B1**

(12) **EUROPEAN PATENT SPECIFICATION**

(45) Date of publication and mention
of the grant of the patent:
**04.05.2022 Bulletin 2022/18**

(21) Application number: **14763448.9**

(22) Date of filing: **12.03.2014**

(51) International Patent Classification (IPC):
**B60W 10/04** *(2006.01)*   **B60W 10/06** *(2006.01)*
**B60W 10/101** *(2012.01)*   **F02D 11/10** *(2006.01)*
**F02D 41/04** *(2006.01)*   **F16H 61/02** *(2006.01)*
**F16H 61/662** *(2006.01)*

(52) Cooperative Patent Classification (CPC):
**B60W 10/06; B60W 10/107; B60W 30/1882;
B60W 30/19; F02D 11/105; F02D 41/0205;
F02D 41/0225; F16H 61/66259;** B60W 2520/10;
B60W 2540/10; B60W 2540/30; B60W 2710/0605;
B60W 2710/0644; B60W 2710/1005;
B60Y 2200/126;                              (Cont.)

(86) International application number:
**PCT/JP2014/056583**

(87) International publication number:
**WO 2014/142210 (18.09.2014 Gazette 2014/38)**

(54) **VEHICLE CONTROL DEVICE AND MOTORCYCLE EQUIPPED WITH SAME**

FAHRZEUGSTEUERUNGSVORRICHTUNG UND DAMIT AUSGERÜSTETES MOTORRAD

DISPOSITIF DE COMMANDE DE VÉHICULE ET MOTOCYCLE ÉQUIPÉ DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2013   JP 2013049636**

(43) Date of publication of application:
**20.01.2016 Bulletin 2016/03**

(73) Proprietor: **Yamaha Hatsudoki Kabushiki Kaisha
Iwata-shi, Shizuoka 438-8501 (JP)**

(72) Inventor: **ISHIOKA, Kazutoshi
Iwata-shi
Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 0 602 672        WO-A1-2012/017709
WO-A1-2012/017709     WO-A1-2012/035401
WO-A2-2011/021089     JP-A- 2000 356 146
JP-A- 2005 001 485       JP-A- 2005 508 788**

(52) Cooperative Patent Classification (CPC): (Cont.)
F02D 2400/12; F16H 2061/6611

**Description**

Technical Field

The present invention relates to a vehicle control device which electronically controls both opening of a throttle valve adjusting amount of air supplied to an engine and transmission ratio of a continuously variable transmission.

Background Art

In the related art, there is a vehicle control device which electronically controls transmission ratio of a continuously variable transmission and opening of a throttle valve (hereinafter, referred to as a throttle opening) by using an actuator (for example, refer to Japanese Patent No. 3754188). In the control of the related art, first, a required drive force of the vehicle is calculated on the basis of an operation amount of an accelerator (an accelerator operation amount) operated by driver, and a vehicle speed. Then, a target engine rotation speed and a throttle opening are calculated so that the required drive force is obtained.

WO 2012/017709 A1, WO 2011/021089 A2, WO 2012/035401 A1 and EP 0 602 672 A1 disclose further examples of powertrain control solutions.

Summary of Invention

Technical Problem

In motorcycles, engine rotation speed more considerably influences riding feeling than in four-wheeled vehicles, and thus there is a strong need for setting engine rotation speed to a speed for realizing a comfortable riding feeling. However, in the control of the related art, a required drive force is first calculated, and then a target engine rotation speed is calculated so that the required drive force is obtained. In such control of the related art, since the target engine rotation speed is influenced by the required drive force, it may be difficult to control engine rotation speed so that a comfortable riding feeling is obtained.

An object of the present invention is to provide a vehicle control device which electronically controls transmission ratio of a continuously variable transmission and throttle opening, and can provide a comfortable riding feeling and can realize engine rotation speed matching driving intention of drivers, and a motorcycle provided therewith.

Solution to Problem

The above problem is solved by a control device according to claim 1, a motorcycle according to claim 8, as well as by a control method according to claim 9.

According to the present invention, in contrast to the control of the related art, a target engine rotation speed is first calculated, and then a target value related to a drive force is calculated. For this reason, it is possible to reduce the influence of the target value related to drive force of vehicle to the target engine rotation speed. As a result, it becomes easier to control an engine rotation speed so that a comfortable riding feeling can be obtained. In addition, since a driving intention value is used to calculate a target engine rotation speed, it is possible to realize an engine rotation speed suitable for a driving intention of driver. For example, an engine rotation speed defined by the second basic information is a rotation speed which can realize more favorable acceleration responsiveness than an engine rotation speed defined by the first basic information. In this example, in a case where driver desires traveling with good acceleration responsiveness, a target engine rotation speed can be set to a rotation speed close to the second engine rotation speed obtained by using the second basic information. Further, the target engine rotation speed may be the same as an engine rotation speed corresponding to a driving intention value, and may alternatively be an engine rotation speed obtained by correcting an engine rotation speed corresponding to a driving intention value. Still further, the target value of a drive force of the vehicle is, for example, a target value of torque of a drive wheel or an power of the drive wheel. Furthermore, the target value of a drive force of the vehicle may be a target value of engine torque, a target value of an engine power, a target value of acceleration of the vehicle, and the like (a product of acceleration of the vehicle and a vehicle weight leads to a drive force of the vehicle).

The driving intention acquisition unit may calculate the driving intention value on the basis of a driving state of the vehicle. With this configuration, it is possible to acquire a driving intention value without driver's operation.

The target engine rotation speed calculation unit may correct the engine rotation speed corresponding to the driving intention value, and then calculate the corrected engine rotation speed as the target engine rotation speed. With this configuration, for example, it is possible to realize good fuel consumption traveling by reducing a target engine rotation speed through correction.

The first basic information may correlate accelerator operation amount with engine rotation speed in the first driving mode, and the second basic information may correlate accelerator operation amount with engine rotation speed in the second driving mode. The first basic engine rotation speed calculation unit may refer to the first basic information, and calculate the first engine rotation speed on the basis of the accelerator operation amount detected by the sensor. The second basic engine rotation speed calculation unit may refer to the second basic information, and calculate the second engine rotation speed on the basis of the accelerator operation amount detected by the sensor.

The driving intention acquisition unit may restrict change in the driving intention value in a case where the vehicle is in a predefined traveling situation. The predefined traveling situation is a traveling situation in which a request for acceleration from driver is estimated to be increased, and the driving intention acquisition unit may restrict a change in the driving intention value so that the engine rotation speed corresponding to the driving intention value is prevented from being reduced, in the traveling situation in which the request for acceleration from driver is estimated to be increased. With this configuration, in the traveling situation in which the request for acceleration from driver is estimated to be increased, it is possible to prevent the acceleration responsiveness from being reduced due to a change in the driving intention value. The predefined traveling situation is, for example, a case where the vehicle is traveling on a curved road, a case where a brake device is working, or a case where the vehicle is traveling on an uphill road.

Brief Description of Drawings

[Fig. 1] Fig. 1 is a side view of a motorcycle including a control device according to an embodiment of the present invention.
[Fig. 2] Fig. 2 is a block diagram illustrating a configuration of the motorcycle.
[Fig. 3] Fig. 3 is a block diagram illustrating a process performed by the control device.
[Fig. 4] Fig. 4 is a block diagram illustrating a process performed by a reference target engine rotation speed calculation portion.
[Fig. 5] Fig. 5 illustrates examples of an engine rotation speed map, in which Fig. 5(a) illustrates an example of a first engine rotation speed map (first basic information), and Fig. 5 (b) illustrates an example of a second engine rotation speed map (second basic information).
[Fig. 6] Fig. 6 is a diagram illustrating an example of a process performed by a calculation part of the reference target engine rotation speed calculation portion.
[Fig. 7] Fig. 7 illustrates examples of a map used to calculate driving intention value.
[Fig. 8] Fig. 8 illustrates a summary of control performed by the control device.

Description of Embodiments

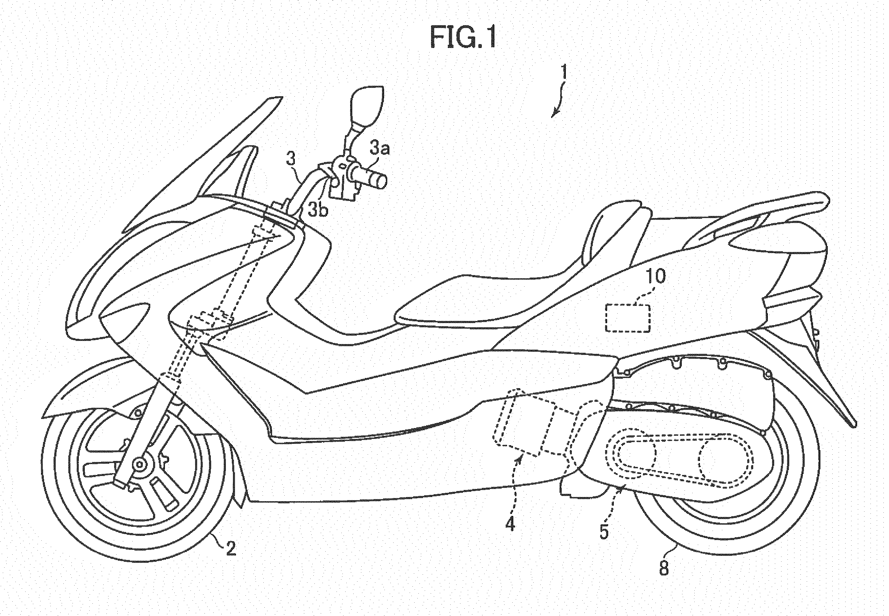

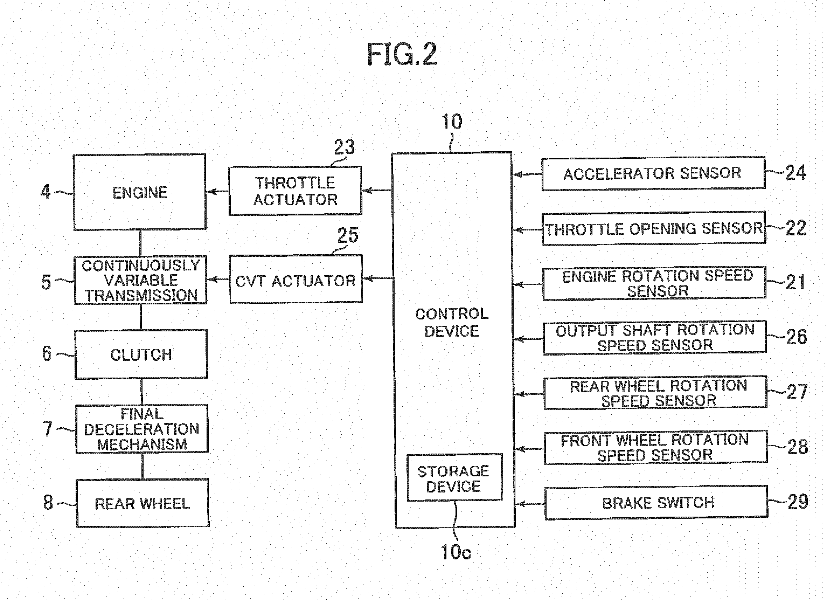

Hereinafter, an embodiment of the present invention will be described with reference to the drawings. Fig. 1 is a side view of a motorcycle 1 provided with a control device 10 according to the embodiment of the present invention. Fig. 2 is a block diagram illustrating a configuration of the motorcycle 1.

As illustrated in Fig. 1, the motorcycle 1 includes a front wheel 2 and a rear wheel 8. The front wheel 2 is provided with a front wheel rotation speed sensor 28 (refer to Fig. 2) which outputs a signal corresponding to a rotation speed of the front wheel 2. The rear wheel 8 is provided with a rear wheel rotation speed sensor 27 (refer to Fig. 2) which outputs a signal corresponding to a rotation speed of the rear wheel 8. The control device 10 calculates a vehicle speed on the basis of an output signal from the front wheel rotation speed sensor 28 or the rear wheel rotation speed sensor 27. The motorcycle 1 includes a steering assembly 3 for turning the front wheel 2. Grips 3a are provided on both sides of the steering assembly 3. One grip 3a functions as an accelerator grip, and the accelerator grip is provided with an accelerator sensor 24 (refer to Fig. 2) for detecting an operation amount thereof (accelerator operation amount) . Brake devices for braking the front wheel 2 and the rear wheel 8 are provided therein. A brake lever 3b for activating the brake devices is provided in the steering assembly 3. The brake lever 3b is provided with a brake switch 29 (refer to Fig. 2) for detecting an operation thereon.

As illustrated in Fig. 2, the motorcycle 1 includes a continuously variable transmission (hereinafter, referred to as a CVT) 5, a clutch 6, and a final deceleration mechanism 7 on a torque transmission path from an engine 4 to the rear wheel 8 which is a drive wheel. In the present example, the CVT 5 is disposed on the downstream side of the engine 4, and the clutch 6 is disposed on the downstream side of the CVT 5. In addition, the final deceleration mechanism 7 is disposed between the clutch 6 and the rear wheel 8. The clutch 6 is an automatic clutch such as a centrifugal clutch.

The engine 4 includes a cylinder, a piston disposed inside the cylinder, a crank shaft connected to the piston, and the like. The motorcycle 1 includes an engine rotation speed sensor 21 which detects an engine rotation speed. In addition, the engine 4 includes a throttle valve which controls an amount of air supplied to the engine 4 and an injector which supplies fuel to the engine 4 in an intake passage connected to a combustion chamber of the engine 4. The motorcycle 1 includes a throttle opening sensor 22 which detects an opening of the throttle valve (throttle opening), and a throttle actuator 23 which actuates the throttle valve.

The CVT 5 includes an input shaft interlocking with the crank shaft, a driving pulley which is disposed on the input shaft, an output shaft, a driven pulley which is disposed on the output shaft, and a belt which is held on the driving pulley and the driven pulley. The CVT 5 transmits rotation (torque) from the driving pulley to the driven pulley. The motorcycle 1 includes a CVT actuator 25 which controls a transmission ratio of the CVT 5. The CVT actuator 25 controls the transmission ratio, for example, by moving one of two sheaves constituting the driving pulley. Alternatively, the CVT actuator 25 may control the transmission ratio, for example, by moving one of two sheaves constituting the driven pulley. The CVT 5 is provided with an output shaft rotation speed sensor 26 which detects a rotation speed of the output shaft of the CVT 5.

The control device 10 includes a storage device 10c and a microprocessor executing a program stored in the storage device 10c. The storage device 10c stores a map to be used to control the engine 4 and the CVT 5. The control device 10 may include a microprocessor which mainly controls the engine 4 and a microprocessor which mainly controls the CVT 5. In this case, the two microprocessors perform communication according to a predefined protocol and transmit and receive information which is calculated by each microprocessor. Output signals from the sensors 21, 22, 24, 26, 27, 28 and 29 are input to the control device 10. The control device 10 moves the actuators 23 and 25 on the basis of the output signals from the sensors 21, 22, 24, 26, 27, 28 and 29 so as to control the CVT 5 and the engine 4. The control device 10 controls a transmission ratio of the CVT 5 via the CVT actuator 25 and controls a throttle opening via the throttle actuator 23.

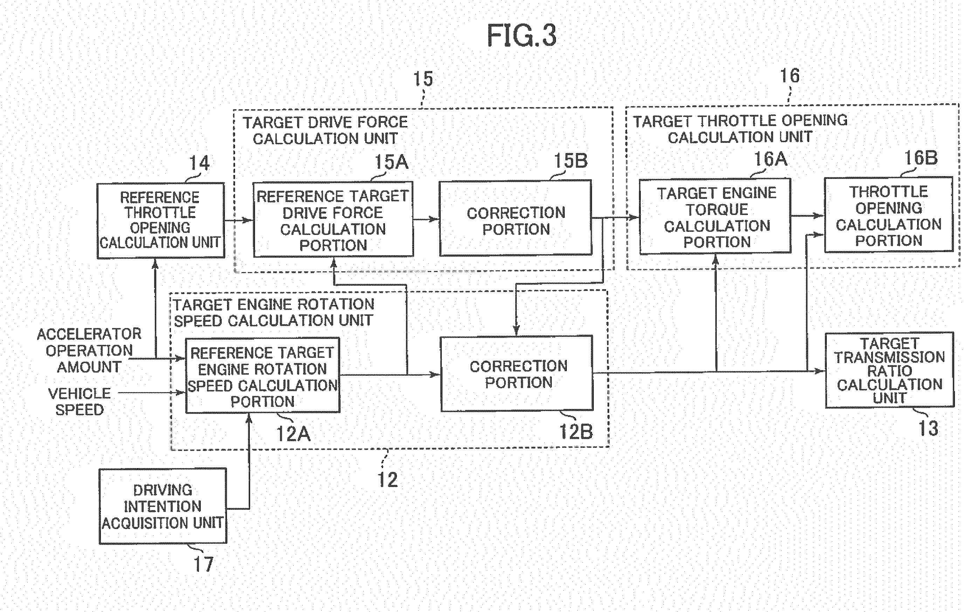

A description will be made of a process performed by the control device 10. Fig. 3 is a block diagram illustrating a process performed by the control device 10. As illustrated in Fig. 3, the control device 10 includes a target engine rotation speed calculation unit 12, a target transmission ratio calculation unit 13, a reference throttle opening calculation unit 14, a target drive force calculation unit 15, a target throttle opening calculation unit 16, and a driving intention acquisition unit 17 . A process performed by each unit of the control device 10 is performed at a predetermined cycle during traveling of the vehicle, and a target transmission ratio of the CVT 5 and a target throttle opening are updated at the cycle.

The target engine rotation speed calculation unit 12 calculates a target engine rotation speed on the basis of an accelerator operation amount detected by the accelerator sensor 24. The target engine rotation speed calculation unit 12 in the present example described initially calculates a reference target engine rotation speed on the basis of the accelerator operation amount which is detected by the accelerator sensor 24. Then, in a case where a correction process is performed on the reference target engine rotation speed, the target engine rotation speed calculation unit 12 sets a corrected engine rotation speed as a target engine rotation speed. In a case where the correction process is not performed on the reference target engine rotation speed, the target engine rotation speed calculation unit 12 sets the reference target engine rotation speed as the target engine rotation speed. Hereinafter, an engine rotation speed (that is, a corrected engine rotation speed, and a reference target engine rotation speed when the correction process is not performed) calculated by the target engine rotation speed calculation unit 12 is referred to as final target engine rotation speed. For example, the target engine rotation speed calculation unit 12 corrects the reference target engine rotation speed so that fuel consumption becomes better than when the engine is driven at the reference target engine rotation speed, and sets the corrected engine rotation speed as the final target engine rotation speed. The target transmission ratio calculation unit 13 calculates a target transmission ratio which is a target value for transmission ratio of the CVT 5 on the basis of the final target engine rotation speed so that actual engine rotation speed reaches the final target engine rotation speed. The control device 10 drives the CVT actuator 25 so that actual transmission ratio of the CVT 5 reaches the target transmission ratio.

The target drive force calculation unit 15 calculates a target value related to drive force of the vehicle on the basis of the accelerator operation amount detected by the accelerator sensor 24 and the above-described reference target engine rotation speed. The target value related to drive force of the vehicle is a target value for, for example, torque of the rear wheel 8 or power of the rear wheel 8 . Alternatively, the target value related to drive force of the vehicle may be a target value for engine torque, a target value for engine power, or the like. Hereinafter, the target value related to drive force is referred to as target drive force. The target throttle opening calculation unit 16 calculates a target throttle opening on the basis of the target drive force and the final target engine rotation speed so that the target drive force can be obtained while driving the engine at the final target engine rotation speed. The control device 10 drives the throttle actuator 23 so that the actual throttle opening reaches the target throttle opening.

As mentioned above, in the present embodiment, contrary to the conventional control, a target engine rotation speed is first calculated, and then a target drive force is calculated. For this reason, it is possible to reduce an influence of the target drive force of the vehicle to the target engine rotation speed. As a result, it becomes easier to control engine rotation speed so that a comfortable riding feeling can be realized. Particularly, in the present embodiment, initially, the target drive force is calculated on the basis of the accelerator operation amount and the reference target engine rotation speed. Then, the target throttle opening is calculated on the basis of the final target engine rotation speed obtained from the reference target engine rotation speed, and the target drive force. For this reason, for example, drive force of the vehicle can be adjusted and controlled while maintaining rotation speed of the engine 4 at the final target engine rotation speed. For example, while maintaining rotation speed of the engine 4 at the final target engine rotation speed, it is possible to obtain a drive force which is the same as the drive force which is obtained at the reference target engine rotation speed and at a throttle opening corresponding to the accelerator operation amount. Further, in a case where the correction process is performed on target drive force, it is possible to drive the engine 4 so that the corrected target drive force can be obtained while maintaining rotation speed of the engine 4 at the final target engine rotation speed.

As illustrated in Fig. 3, the target engine rotation speed calculation unit 12 includes a reference target engine rotation speed calculation portion 12A. The reference target engine rotation speed calculation portion 12A calculates a reference target engine rotation speed on the basis of an accelerator operation amount detected by the sensor and a numerical value (hereinafter, referred to as driving intention value) indicating a driving intention. Specifically, the following process is performed. The storage device 10c stores in advance first basic information (for example, a map) which defines engine rotation speed in a first driving mode, and second basic information which defines engine rotation speed in a second driving mode. The driving modes are a driving mode (acceleration responsiveness mode) in which acceleration responsiveness is good, a driving mode (low fuel consumption mode) in which fuel consumption is good, a normal driving mode, or the like. In each of the first basic information and the second basic information, for example, engine rotation speed are correlated with accelerator operation amount. The reference target engine rotation speed calculation portion 12A calculates an engine rotation speed by using each of the first basic information and the second basic information on the basis of the accelerator operation amount detected by the sensor. In addition, the reference target engine rotation speed calculation portion 12A calculates a reference target engine rotation speed between two engine rotation speeds calculated by using the first basic information and the second basic information, on the basis of the driving intention value.

The driving intention value is a numerical value indicating driver's request for traveling manner of the vehicle. For example, the driving intention value is a numerical value indicating the extent of driver's request for the acceleration responsiveness mode or the extent of driver's request for the low fuel consumption mode. As will be described later, the driving intention value is calculated on the basis of, for example, at least one of the present driving state of the vehicle and the past driving state of the vehicle. For example, in a case where a change speed of accelerator operation amount is high, or in a case where a change frequency of accelerator operation amount is high, driver is estimated to desire better acceleration responsiveness. In general, if engine rotation speed is high, the acceleration responsiveness becomes better. If engine rotation speed is low, fuel consumption becomes better. For this reason, in a case where the driving intention value indicates that driver strongly desires traveling with good acceleration responsiveness, the control device 10 sets the reference target engine rotation speed to be high.

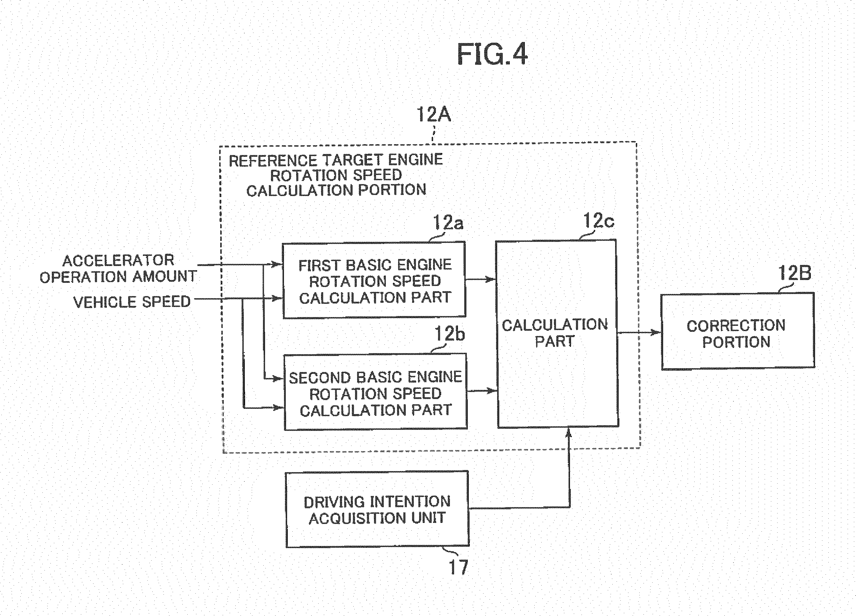

Fig. 4 is a block diagram illustrating a process performed by the reference target engine rotation speed calculation portion 12A. As illustrated in Fig. 4, the reference target engine rotation speed calculation portion 12A includes a first basic engine rotation speed calculation part 12a, a second basic engine rotation speed calculation part 12b, and a calculation part 12c.

As described above, the storage device 10c stores the first basic information which associates engine rotation speed with accelerator operation amount and the second basic information which associates engine rotation speed with accelerator operation amount. The first basic engine rotation speed calculation part 12a and the second basic engine rotation speed calculation part 12b calculates an engine rotation speed corresponding to the accelerator operation amount detected by the sensor by respectively using the first basic information and the second basic information. Hereinafter, the engine rotation speed obtained by using the first basic information is referred to as first basic engine rotation speed. The engine rotation speed obtained by using the second basic information is referred to as second basic engine rotation speed. The calculation part 12c calculates the reference target engine rotation speed on the basis of the first basic engine rotation speed, the second basic engine rotation speed, and the driving intention value. More specifically, the calculation part 12c calculates, as a reference target engine rotation speed, an engine rotation speed which is located between the first basic engine rotation speed and the second basic engine rotation speed and which corresponds to the driving intention value.

Engine rotation speed defined by the first basic information is different from engine rotation speed defined by the second basic information. For example, the engine rotation speed defined by the second basic information is a rotation speed which realize more favorable acceleration responsiveness than the engine rotation speed defined by the first basic information. In other words, the engine rotation speed defined by the first basic information is a rotation speed which realize lower fuel consumption than the engine rotation speed defined by the second basic information. That is, the second basic information defines engine rotation speed in the acceleration responsiveness mode, and the first basic information defines engine rotation speed in the low fuel consumption mode. In general, if engine rotation speed is high, acceleration responsiveness becomes better. If engine rotation speed is low, fuel consumption becomes better. For this reason, the engine rotation speed defined by the second basic information is higher than the engine rotation speed defined by the first basic information.

Each of the first basic information and the second information is a map which associates, for example, engine rotation speed and accelerator operation amount with information regarding vehicle speed. A description will be made of an example of a case where the storage device 10c stores a first engine rotation speed map as the first basic information and a second engine rotation speed map as the second basic information.

The information regarding vehicle speed is a vehicle speed calculated on the basis, for example, of an rotation speed of the front wheel 2 or an engine rotation speed of the rear wheel 8. Alternatively, the information regarding vehicle speed may be a rotation speed of a member located on the downstream side of the output shaft of the CVT 5 in the torque transmission path, such as a rotation speed of the rear wheel 8, a rotation speed of the output shaft of the CVT 5, a rotation speed of the member of the final deceleration mechanism 7, or a rotation speed of the member of the clutch 6. In other words, the information regarding vehicle speed is information which can be converted into a vehicle speed by being multiplied by a coefficient or a deceleration ratio. The rotation speed of the output shaft of the CVT 5 can be converted into a vehicle speed in a state in which the clutch 6 is engaged therewith. In the following description, maps in which vehicle speed, accelerator operation amount, and engine rotation speed are correlated with each other are used as an example of the first and second engine rotation speed maps.

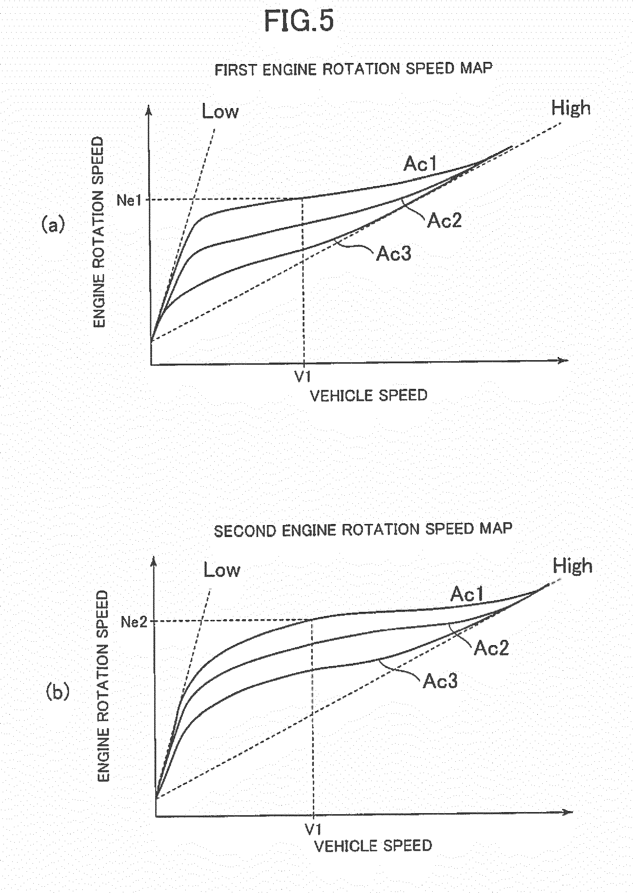

Fig. 5 illustrates examples of the engine rotation speed maps which are the basic information. Fig. 5(a) illustrates an example of the first engine rotation speed map, and Fig. 5(b) illustrates an example of the second engine rotation speed map. In the drawings, a transverse axis expresses vehicle speed, and a longitudinal axis expresses engine rotation speed. In addition, a plurality of lines indicating a relationship between the engine rotation speed and the vehicle speed are exemplified in those drawings. These lines respectively indicate relationships between engine rotation speed and vehicle speed at accelerator operation amounts Ac1, Ac2 and Ac3. A line "Low" of the same drawings indicates a relationship between vehicle speed and engine rotation speed in a case where the transmission ratio is set to be "LOW", and a line "High" indicates a relationship between vehicle speed and engine rotation speed in a case where the transmission ratio is set to be "HIGH (TOP)".

The engine rotation speed defined by the second engine rotation speed map is higher than the engine rotation speed defined by the first engine rotation speed map. For example, in a case where a vehicle speed is V1 at the accelerator operation amount Ac1, the engine rotation speed Ne2 defined by the second engine rotation speed map is higher than the engine rotation speed Ne1 defined by the first engine rotation speed map. In other words, in a case where the engine rotation speeds of both the maps are compared with each other at the same accelerator operation amount and the same vehicle speed, the engine rotation speed of the second engine rotation speed map is higher than the engine rotation speed of the first engine rotation speed map. Alternatively, the engine rotation speed of the second engine rotation speed map may not necessarily be higher than the engine rotation speed of the first engine rotation speed map in the entire vehicle speed range. For example, the engine rotation speed of the second engine rotation speed map may be higher than the engine rotation speed of the first engine rotation speed map only in an intermediate vehicle speed range.

The first basic engine rotation speed calculation part 12a refers to the first engine rotation speed map which is the first basic information, and calculates, as the first basic engine rotation speed, an engine rotation speed corresponding to the accelerator operation amount and the vehicle speed detected by the sensors. Similarly, the second basic engine rotation speed calculation part 12b refers to the second engine rotation speed map which is the second basic information, and calculates, as the second basic engine rotation speed, an engine rotation speed corresponding to the accelerator operation amount and the vehicle speed detected by the sensors.

Alternatively, one of the first basic information and the second basic information may not be a map which associates engine rotation speed, information regarding vehicle speed, and accelerator operation amount with each other. For example, the second basic information may be a map which associates difference between the first basic engine rotation speed and the second basic engine rotation speed, vehicle speed, and accelerator operation amount with each other. Further, the second basic information may be a map which associates ratio between the first basic engine rotation speed and the second basic engine rotation speed, vehicle speed, and accelerator operation amount with each other. In this case, the second basic engine rotation speed calculation part 12b calculates a difference or a ratio corresponding to the accelerator operation amount and the vehicle speed detected by the sensors, and then calculates the second basic engine rotation speed on the basis of the difference or the ratio and the first basic engine rotation speed which is calculated by referring to the first engine rotation speed map. Still further, the second basic information may be a difference or a ratio between the first basic engine rotation speed and the second basic engine rotation speed, which is not dependent on vehicle speed or accelerator operation amount. In this case, the second basic engine rotation speed calculation part 12b calculates the second basic engine rotation speed on the basis of the difference or the ratio and the first basic engine rotation speed which is calculated by referring to the first engine rotation speed map.

The calculation part 12c calculates an engine rotation speed which is located between the first basic engine rotation speed and the second basic engine rotation speed and which corresponds to the driving intention value calculated by the driving intention acquisition unit 17. The engine rotation speed calculated in this way is the above-described reference target engine rotation speed. As described above, the driving intention value is a numerical value indicating the extent of driver's request for traveling manner of the vehicle. For example, in a case where the driving intention value is a numerical value indicating the extent of driver's request for good acceleration responsiveness, the calculation part 12c makes the reference target engine rotation speed closer to the second basic engine rotation speed as the driving intention value increases. In a case where the driving intention value is a numerical value indicating the extent of driver's request for good fuel consumption, the calculation part 12c makes the reference target engine rotation speed closer to the first basic engine rotation speed as the driving intention value increases. That is, as the driving intention value increases, the calculation part 12c makes the reference target engine rotation speed closer to one of the two basic engine rotation speeds.

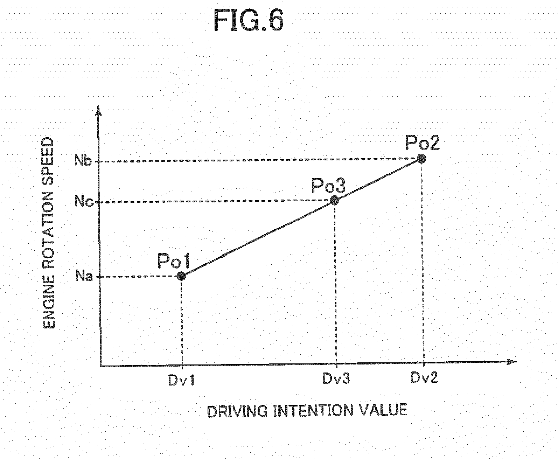

Fig. 6 is a diagram illustrating an example of a process performed by the calculation part 12c. In the same drawing, a transverse axis expresses driving intention value, and a longitudinal axis expresses engine rotation speed. A line L7 of the same drawing is a straight line which passes through a point Po1 (driving intention value Dv1, first basic engine rotation speed Na) and a point Po2 (driving intention value Dv2, second basic engine rotation speed Nb). In a case where the driving intention value is Dv3 (Dv1<Dv3<Dv2), the calculation part 12c calculates an engine rotation speed Nc at a point Po3 (driving intention value Dv3, engine rotation speed Nc) on the line L7 as the reference target engine rotation speed (Na<Nc<Nb). That is, in the example illustrated in Fig. 6, the calculation part 12c linearly complements engine rotation speed between the first basic engine rotation speed Na and the second basic engine rotation speed Nb depending on the driving intention value, and sets, as the reference target engine rotation speed, the engine rotation speed corresponding to the driving intention value Dv3 calculated by the driving intention acquisition unit 17.

As an example, the driving intention value Dv1 is the minimum value of driving intention value which can be calculated by the driving intention acquisition unit 17, and the driving intention value Dv2 is the maximum value of driving intention value which can be calculated by the driving intention acquisition unit 17. In a case where the driving intention acquisition unit 17 calculates the minimum value of driving intention value, the first basic engine rotation speed Na is calculated as the reference target engine rotation speed. On the other hand, in a case where the driving intention acquisition unit 17 calculates the maximum value of driving intention value, the second basic engine rotation speed Nb is calculated as the reference target engine rotation speed.

A process performed by the calculation part 12c is not limited thereto. For example, the driving intention value may be smaller than the driving intention value Dv1. In a case where a driving intention value calculated by the driving intention acquisition unit 17 is smaller than the driving intention value Dv1, the calculation part 12c sets, for example, the first basic engine rotation speed as the reference target engine rotation speed regardless of the driving intention value. In addition, the driving intention value may be greater than the driving intention value Dv2. In a case where a driving intention value calculated by the driving intention acquisition unit 17 is greater than the driving intention value Dv2, the calculation part 12c sets, for example, the second basic engine rotation speed as the reference target engine rotation speed regardless of the driving intention value.

A description will be made of an example of a process performed by the driving intention acquisition unit 17. The driving intention acquisition unit 17 calculates the driving intention value on the basis of driving state of the vehicle detected by the sensor. For example, the driving intention acquisition unit 17 calculates the driving intention value on the basis of at least one parameter selected from accelerator operation amount, vehicle speed, change speed of the accelerator operation amount which is differential value of the accelerator operation amount, and acceleration of the vehicle.

For example, the driving intention acquisition unit 17 calculates a first load state value on the basis of the accelerator operation amount and the vehicle speed. In addition, the driving intention acquisition unit 17 calculates a second load state value on the basis of the change speed of accelerator operation amount. Further, the driving intention acquisition unit 17 calculates a third load state value on the basis of the vehicle speed, and the acceleration of the vehicle. The driving intention acquisition unit 17 calculates a driving intention value by using all or some of the load state values. Each load state value is a numerical value to evaluate a possibility that a load applied to the engine 4 may change.

For example, as a possibility of change in load applied to the engine becomes higher, driver is estimated to request better acceleration responsiveness. Therefore, in an example of using, as the driving state value, a numerical value indicating the extent of driver's request for good acceleration responsiveness, the driving intention acquisition unit 17 calculates a greater driving intention value as the possibility of change in load applied to the engine becomes higher.

In addition, for example, as a possibility of change in load applied to the engine becomes lower, driver is estimated to request better fuel consumption. Therefore, in an example of using a numerical value indicating the extent of driver's request for good fuel consumption as the driving state value, the driving intention acquisition unit 17 calculates a greater driving intention value as the possibility of change in load applied to the engine becomes lower.

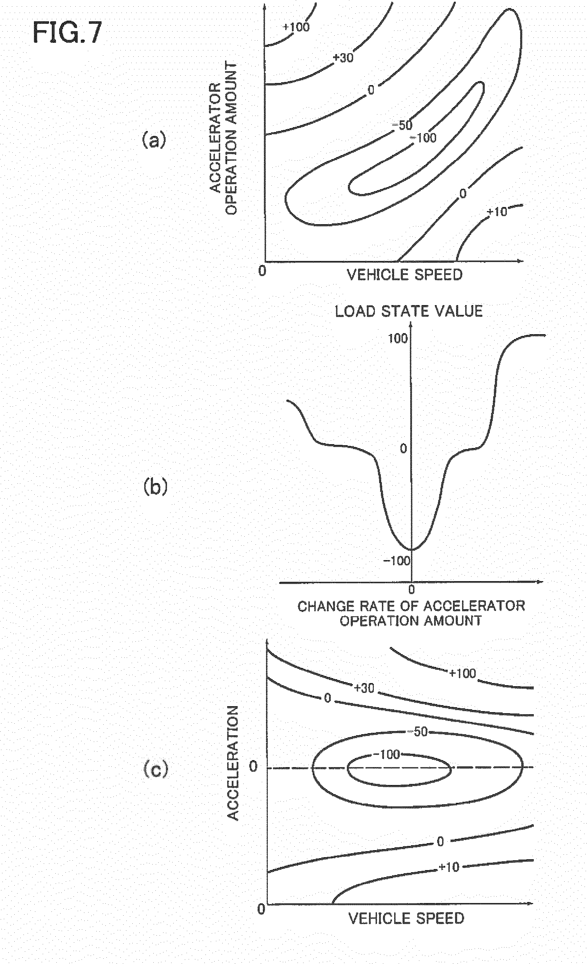

Fig. 7(a) illustrates an example of a map which correlates accelerator operation amount, vehicle speed, and the first load state value with each other. In the same drawing, solid lines indicate equal level lines of the first load state value. In this map, the first load state value is relatively small in a driving region (for example, a region in which both of the vehicle speed and the accelerator operation amount are nearly intermediate values) in which the possibility of change in load applied to the engine is estimated to be low. The driving intention acquisition unit 17 refers to, for example, this map, and calculates the first load state value by using the accelerator operation amount and the vehicle speed which are detected on the basis of output signals from the sensors.

Fig. 7(b) illustrates an example of a map which correlates change speed of accelerator operation amount and second load state value with each other. Also in this map, the second load state value is relatively small in a driving region in which the possibility of change in load applied to the engine is estimated to be low, that is, in a driving region in which the change speed of accelerator operation amount is small. The driving intention acquisition unit 17 calculates a change speed of accelerator operation amount, then, refers to this map, and calculates the second load state value corresponding to the calculated change speed of accelerator operation amount.

Fig. 7(c) illustrates an example of a map which correlates vehicle speed, acceleration, and third load state value with each other. In this drawing, solid lines indicate equal level lines of the third load state value. Also in this map, the third load state value is small in a driving region in which the possibility of change in load applied to the engine is estimated to be low, specifically, in a driving region in which the vehicle speed is an intermediate value and the acceleration is small. The driving intention acquisition unit 17 refers to this map, and calculates the third load state value corresponding to the vehicle speed and the acceleration which are detected on the basis of output signals from the sensors.

The driving intention acquisition unit 17 may select a load state value to be used to calculate the driving intention value from the above-described three load state values, and may calculate the driving intention value on the basis of the selected load state value. For example, in a case where signs (positive or negative) of all of the above-described load state values match each other, the driving intention acquisition unit 17 calculates the driving intention value by using all of the load state values. On the other hand, in a case where the signs of the three load state values do not match each other, the driving intention acquisition unit 17 does not use any load state value, and does not calculate the driving intention value in the present process. In other words, the driving intention acquisition unit 17 does not update the driving intention value obtained in the previous process. Alternatively, the driving intention acquisition unit 17 may select load state values whose signs match each other from the first load state value, the second load state value, and the third load state value, and may calculate the driving intention value by using the selected load state values.

Further, the driving intention acquisition unit 17 may calculate the driving intention value on the basis of selected load state values and the driving intention value obtained in the previous process. For example, the driving intention acquisition unit 17 may calculate a multiplication product of the selected load state values, may add the product to the driving intention value obtained in the previous process, and may set the result of the addition as a new driving intention value. Still alternatively, the driving intention acquisition unit 17 may calculate a sum of the selected load state values, may add the sum to the driving intention value obtained in the previous process, and may set the result of the addition as a new driving intention value. Furthermore, the driving intention acquisition unit 17 may calculate an average or a median of the selected load state values, may add the average or the median to the driving intention value obtained in the previous process, and may set the result of the addition as a new driving intention value.

The driving intention acquisition unit 17 restricts a change in driving intention value in a case where the vehicle is in a predefined traveling situation. For example, in a traveling situation in which the request for acceleration from driver is estimated to be increased, the driving intention acquisition unit 17 restricts a change in driving intention value so as to prevent a reduction in the reference target engine rotation speed. That is, in the traveling situation in which the request for acceleration from driver is estimated to be increased, the driving intention acquisition unit 17 restricts a change in driving intention value so as to prevent reference target engine rotation speed from changing to the first basic engine rotation speed. In other words, in a case where a first value is defined as a driving intention value which generates the first basic engine rotation speed as the reference target engine rotation speed, and a second value is defined as a driving intention value which generates the second basic engine rotation speed as the reference target engine rotation speed, the driving intention acquisition unit 17 prevents the driving intention value from changing in a direction from the second value toward the first value.

As an example of the restriction, until the predefined traveling situation described above ends, the driving intention acquisition unit 17 maintains the driving intention value as the driving intention value calculated at the time when the above described traveling situation starts. Alternatively, as another example of the restriction, the driving intention acquisition unit 17 may change the driving intention value to the second value until the above described traveling situation ends.

In the above-described way, it is possible to prevent acceleration responsiveness from being reduced in the traveling situation in which the request for acceleration from driver is estimated to be increased. In the present embodiment, rather than a change in reference target engine rotation speed, a change in driving intention value is restricted. For this reason, in a case where the accelerator operation amount changes, a relationship (for example, a difference) between the reference target engine rotation speed and the first basic engine rotation speed and a relationship (for example, a difference) between the reference target engine rotation speed and the second basic engine rotation speed are maintained, but the reference target engine rotation speed changes because both of the first basic engine rotation speed and the second basic engine rotation speed change.

An example of the traveling situation in which the request for acceleration from driver is estimated to be increased is a situation in which the vehicle is turning. In a case where the vehicle is turning on a curved road, the vehicle speed is reduced, and then when the vehicle starts linear traveling, driver's request for acceleration increases, and thus vehicle speed is increased. A determination of whether or not the vehicle is turning may be performed as follows.

If motorcycles are turning, the motorcycle body is inclined. As a result, each of the tires comes into contact with the ground surface not at the center of the tire in the width direction but at a position shifted toward the side of the tire (hereinafter, a portion of tire surface which comes into contact with the ground surface is referred to as ground contact point). As a result, a distance (a rotation radius of the front wheel and a rotation radius of the rear wheel) between the ground contact point and the wheel axle is reduced. Since the thickness of the tire of the front wheel (a radius of a section of the tire) is different from the thickness of the tire of the rear wheel (a radius of a section of the tire), a difference between a decrease in the rotation radius of the front wheel and a decrease in the rotation radius of the rear wheel is caused. Specifically, in a case where the tire of the rear wheel is thicker than the tire of the front wheel, the rate of the decrease in the rotation radius of the rear wheel is higher than the rate of the decrease in the rotation radius of the front wheel. As a result, a vehicle speed calculated by using the rotation speed of the rear wheel is higher than a vehicle speed calculated by using the rotation speed of the front wheel. Therefore, the driving intention acquisition unit 17 determines whether or not the vehicle is turning on the basis of the difference between the vehicle speed calculated by using the rotation speed of the front wheel 2 and the vehicle speed calculated by using the rotation speed of the rear wheel 8. For example, in a case where the difference between the vehicle speed calculated by using the rotation speed of the rear wheel and the vehicle speed calculated by using the rotation speed of the front wheel exceeds a threshold value, or in a case where a ratio of the difference between the vehicle speeds with respect to an average of both the vehicle speeds exceeds a threshold value, it is determined that the vehicle is turning.

A determination of whether or not the vehicle is turning is not limited to the above-described processes. For example, an acceleration sensor which detects an inclination of the motorcycle body toward the rights side and the left side may be provided in the motorcycle. In this case, for example, if the motorcycle body is inclined, and the vehicle speed is higher than a threshold value, the driving intention acquisition unit 17 determines that the vehicle is turning.

Another example of the traveling situation in which the request for acceleration from driver is estimated to be increased is a situation in which the brake device is working. For example, the switch 29 detecting an operation of the brake lever 3b or a sensor detecting a working state of the brake device for the front wheel 2 or the rear wheel 8 is provided in the motorcycle 1. The driving intention acquisition unit 17 determines whether or not the brake device is working on the basis of the output signal from the switch or the sensor.

Still another example of the traveling situation in which the request for acceleration from driver is estimated to be increased is a case in which the vehicle is traveling on an uphill road. The driving intention acquisition unit 17 calculates a traveling load on the basis of, for example, a vehicle speed, the present engine rotation speed, and the present throttle opening, and determines whether or not the vehicle is traveling on an uphill road on the basis of the traveling load.

In a case where acceleration of the vehicle is denoted by "a", a weight of the vehicle is denoted by "M", engine torque is denoted by "Teg", inertial torque of the engine 4 is denoted by "Ti", mechanical loss of torque on the path from the CVT 5 to the rear wheel 8 is denoted by "Tloss", and the entire traveling load applied to the vehicle is denoted by "Lv", these parameters substantially have the following relationship. Entire traveling load "Lv" includes traveling resistance (hereinafter, referred to as reference traveling resistance) such as air resistance when the vehicle travels on a flat road.

$$(Teg-Ti) \times Transmission\ ratio - Tloss = (M \times a + Lv) \times k$$

The engine torque "Teg" is calculated by referring to an engine torque map indicating a relationship between throttle opening, engine rotation speed, and engine torque. The inertial torque "Ti" is a value obtained by multiplying a change speed in engine rotation speed by an inertial moment of a mechanism (the crank shaft or the piston of the engine 4) located further toward the upstream side than the CVT 5. "Ttransmission ratio" is, for example, the present actual transmission ratio of the CVT 5, and may be calculated by using actual engine rotation speed and vehicle speed detected by the sensors. "k" is a coefficient obtained by using a radius of the rear wheel 8 or a deceleration ratio in of the final deceleration mechanism 7. Therefore, the driving intention acquisition unit 17 calculates the engine torque "Teg" on the basis of, for example, an engine rotation speed and a throttle opening, and calculates the entire traveling load "Lv" from the above-described relation on the basis of the engine torque "Teg", a change speed of engine rotation speed, and a vehicle speed. The driving intention acquisition unit 17 calculates a value obtained by subtracting the reference traveling resistance caused by air resistance or the like from the entire traveling load "Lv", as the traveling load. The traveling load calculated in the above-described way generally has a positive value in a case where the vehicle travels on an uphill road. In addition, the reference traveling resistance increases as vehicle speed increases. A relationship between the vehicle speed and the reference traveling resistance may be obtained in advance through an experimentation or the like. Thus, the driving intention acquisition unit 17 refers to, for example, a map or a relational expression in which the vehicle speed is correlated with the reference traveling resistance, and calculates the reference traveling resistance on the basis of the vehicle speed.

A process performed by the driving intention acquisition unit 17 is not limited to the above description. For example, the motorcycle 1 may include an operation member for receiving driver's request for traveling manner of the vehicle. For example, the motorcycle 1 may include an operation member which allows driver to input a request for good acceleration responsiveness. In this case, the driving intention acquisition unit 17 detects an operation amount on the operation member and sets the operation amount as a driving intention value.

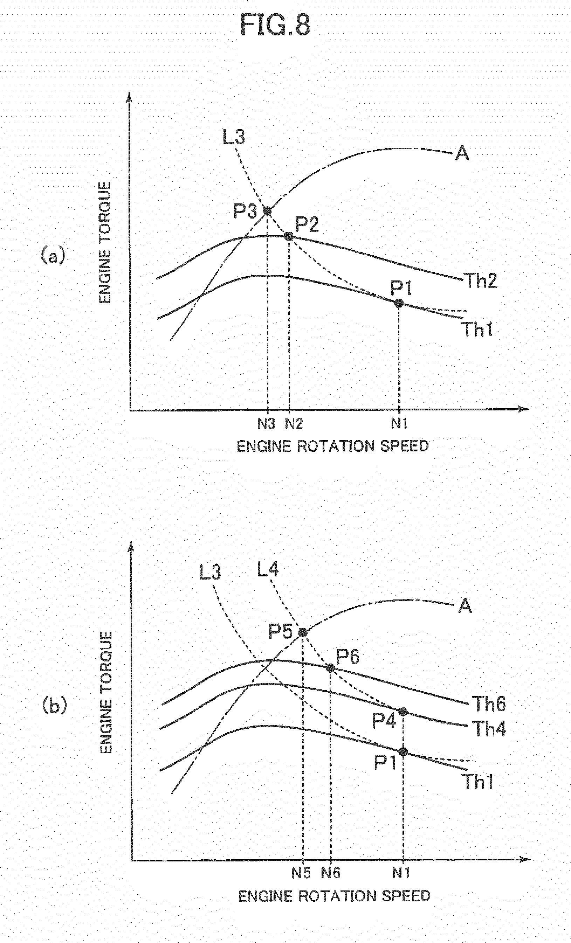

A description will be made of a summary of a process after the reference target engine rotation speed is calculated. Fig. 8 illustrates the summary of the process. In Fig. 8, a transverse axis expresses engine rotation speed, and a longitudinal axis expresses engine torque. In Fig. 8, a torque curve indicating a relationship between engine torque and engine rotation speed is drawn. Fig. 8(a) illustrates torque curves corresponding to throttle openings Th1 and Th2, and Fig. 8(b) illustrates torque curves corresponding to throttle openings Th1, Th4 and Th6. In Figs. 8(a) and 8(b), a line A is a curve (hereinafter, referred to as a best fuel consumption curve) indicating driving point at which fuel consumption is best. In Figs. 8(a) and 8(b), a line L3 is an equal power curve indicating driving point at which the same engine power (engine torque × engine rotation speed) as at a driving point P1 (engine rotation speed N1, throttle opening Th1) can be obtained. In Fig. 8(b), a line L4 is an equal power curve indicating driving point at which the same engine power as at a driving point P4 (engine rotation speed N1, throttle opening Th4) can be obtained. In Fig. 8, the engine rotation speed N1 is the reference target engine rotation speed, and the throttle opening Th1 is a throttle opening converted from an accelerator operation amount(hereinafter, the throttle opening will be referred to as a reference throttle opening) .

In addition, the control device 10 of the present embodiment may perform one or both of rotation speed correction which is correction on target engine rotation speed and drive force correction which is correction on target value related to drive force of the vehicle.

The target engine rotation speed calculation unit 12 calculates the reference target engine rotation speed N1 as described above. In a case where the rotation speed correction is performed, the target engine rotation speed calculation unit 12 corrects the reference target engine rotation speed N1 and sets the correction result as the final target engine rotation speed. For example, the target engine rotation speed calculation unit 12 calculates the final target engine rotation speed on the basis of the reference target engine rotation speed so that fuel consumption is more improved than in a case of driving the engine 4 at the reference target engine rotation speed. For example, as illustrated in Fig. 8(a), the target engine rotation speed calculation unit 12 sets, as the final target engine rotation speed N2, the engine rotation speed N2 to be located between the reference target engine rotation speed N1 and the best fuel consumption engine rotation speed N3. Alternatively, the target engine rotation speed calculation unit 12 gradually shifts the final target engine rotation speed from the reference target engine rotation speed N1 toward the best fuel consumption engine rotation speed N3. Still alternatively, the target engine rotation speed calculation unit 12 may subtract a predetermined rotation speed from the reference target engine rotation speed N1 and may set the subtraction result as the final target engine rotation speed. The target transmission ratio calculation unit 13 calculates a target transmission ratio of the CVT 5 on the basis of the final target engine rotation speed, and the control device 10 drives the CVT actuator 25 so that the actual transmission ratio matches the target transmission ratio.

As described above, the engine rotation speed at the driving point P1 illustrated in Fig. 8(a) is the reference target engine rotation speed N1. In addition, the throttle opening Th1 at the driving point P1 is a value obtained by converting the accelerator operation amount into an angle of the throttle valve. In a case where the control device 10 performs only the rotation speed correction and does not perform the drive force correction, the control device 10 sets a target throttle opening so that the engine power (a power indicated by the line L3) at the driving point P1 can be obtained, while driving the engine 4 at the final target engine rotation speed N2. Therefore, in this case, the throttle opening Th2 at the driving point P2 is set as the target throttle opening. The driving point P2 is a driving point at which the same engine power as at the driving point P1 can be obtained and the engine rotation speed is the final target engine rotation speed N2. The control device 10 drives the throttle actuator 23 so that the actual throttle opening matches the target throttle opening.

The control device 10 performs the following process in order to calculate the target throttle opening. The target drive force calculation unit 15 calculates a drive force of the vehicle at the driving point P1 on the basis of the reference target engine rotation speed N1 and the accelerator operation amount (specifically, the throttle opening Th1 converted from an accelerator operation amount), and sets the drive force as the reference target drive force. The target throttle opening calculation unit 16 calculates the target throttle opening Th2 on the basis of the final target engine rotation speed N2 and the reference target drive force so that a drive force corresponding to the reference target drive force can be obtained, while driving the engine 4 at the final target engine rotation speed N2. Here, the reference target drive force is a target value which is a basis of the above-described target drive force (for example, a target value for torque of the rear wheel 8 or a target value for power (torque of the rear wheel 8 × a rotation speed of the rear wheel 8) of the rear wheel 8) . In other words, in a case where a correction process to be described later is performed on the drive force, a target value obtained by correcting the reference target drive force is set as the target drive force. Contrary to that, in a case where the correction process is not performed, the reference target drive force is set as the target drive force. Torque of the rear wheel 8 or power of the rear wheel 8 is proportional to engine power. For this reason, as illustrated in Fig. 8(a), if the torque of the rear wheel 8 or the power of the rear wheel 8 at the driving point P1 is set as the target value, the engine rotation speed can be changed while the engine power at the driving point P1 is maintained.

The target engine rotation speed calculation unit 12 sets the reference target engine rotation speed N1 as the final target engine rotation speed in a case where the rotation speed correction is not performed. In a case where the rotation speed correction is not performed, and the drive force correction is performed, the control device 10 sets the target throttle opening so that the engine power higher or lower than the engine power at the driving point P1 can be obtained, while driving the engine 4 at the final target engine rotation speed N1. For example, as illustrated in Fig. 8(b), the control device 10 sets the throttle opening Th4 at the driving point P4 as the target throttle opening so that the engine power indicated by the line L4 which is higher than the engine power indicated by the line L3 can be obtained, while driving the engine 4 at the final target engine rotation speed N1. The driving point P4 is a driving point on the line L4 corresponding to the engine rotation speed N1.

In a case where the drive force correction is performed, the control device 10 performs the following process in order to calculate the target throttle opening. The target drive force calculation unit 15 calculates a drive force of the vehicle at the driving point P1 on the basis of the reference target engine rotation speed N1 and the accelerator operation amount (specifically, the throttle opening Th1 converted from an accelerator operation amount), and sets the drive force as the reference target drive force. Then, the target drive force calculation unit 15 corrects the calculated reference target drive force, and sets the corrected drive force as the target drive force. The target throttle opening calculation unit 16 calculates the target throttle opening Th4 on the basis of the target engine rotation speed N1 and the target drive force so that a drive force corresponding to the target drive force can be obtained, while driving the engine 4 at the target engine rotation speed N1 (which is the same as the reference target engine rotation speed in a case where the rotation speed correction is not performed).

The rotation speed correction and the drive force correction are performed when a predefined condition is satisfied. For example, in the motorcycle provided with an operation member which allows the two corrections to be selected, driver selects one or both of the two corrections by using the operation member. The control device 10 performs correction corresponding to the operation. In addition, if it is detected that the vehicle is traveling on an uphill road, the target drive force calculation unit 15 may perform the drive force correction. Further, in a case where the vehicle performs steady traveling for a specific period of time, the target engine rotation speed calculation unit 12 may perform the rotation speed correction.

Still further, the control device 10 may perform both of the rotation speed correction and the drive force correction together. In this case, the target engine rotation speed calculation unit 12 sets the final target engine rotation speed so that fuel consumption becomes better than when the engine 4 is driven at the reference target engine rotation speed N1, and the target throttle opening calculation unit 16 sets the target throttle opening so that an engine power higher or lower than the engine power at the driving point P1 can be obtained, while driving the engine 4 at the final target engine rotation speed. For example, if the control device 10 intends to obtain the engine power indicated by the line L4, the target engine rotation speed calculation unit 12 sets the final target engine rotation speed N6 between a best fuel consumption engine rotation speed N5 indicated by the line L4 and the reference target engine rotation speed N1. In addition, the target throttle opening calculation unit 16 sets the throttle opening Th6 at the driving point P6 as the target throttle opening so that the engine power indicated by the line L4 can be obtained, while driving the engine 4 at the final target engine rotation speed N6. The best fuel consumption engine rotation speed N5 is an engine rotation speed at the driving point P5 which is an intersection between the line L4 and the best fuel consumption curve A. Further, the driving point P6 is a driving point on the line L4 corresponding to the engine rotation speed N6.

In a case where neither of the rotation speed correction and the drive force correction are performed, the target engine rotation speed calculation unit 12 sets the reference target engine rotation speed N1 as the final target engine rotation speed, and the target throttle opening calculation unit 16 sets the target throttle opening so that the engine power at the driving point P1 can be obtained. Therefore, in this case, the throttle opening Th1 at the driving point P1 is set as the target throttle opening.

Hereinafter, processes performed by the target engine rotation speed calculation unit 12, the target drive force calculation unit 15, and the target throttle opening calculation unit 16 will be described in detail.

The target engine rotation speed calculation unit 12 includes a correction portion 12B as illustrated in Fig. 3. The correction portion 12B calculates the final target engine rotation speed on the basis of the reference target engine rotation speed. Specifically, as described with reference to Fig. 8, the correction portion 12B sets the reference target engine rotation speed as the final target engine rotation speed in a case where the rotation speed correction is not performed. On the other hand, in a case where the rotation speed correction is performed, the correction portion 12B corrects the reference target engine rotation speed by using the best fuel consumption engine rotation speed so that fuel consumption becomes better than when the engine is driven at the reference target engine rotation speed, and sets the correction result as the final target engine rotation speed.

The rotation speed correction includes various manners. For example, the correction portion 12B causes the final target engine rotation speed to gradually shift toward the best fuel consumption engine rotation speed from the reference target engine rotation speed. For example, if the difference between the final target engine rotation speed and the reference target engine rotation speed is denoted by a correction amount ΔN (the final target engine rotation speed = the reference target engine rotation speed + the correction amount ΔN), the correction amount is gradually changed so that the final target engine rotation speed gradually shifts toward the best fuel consumption engine rotation speed.

The gradual change of the correction amount becomes possible, for example, by repeatedly performing a process of adding or subtracting a predefined value to or from the correction amount calculated in the previous process. As another example, the correction portion 12B may integrate, by time, the difference between the reference target engine rotation speed and the best fuel consumption engine rotation speed, and may calculate the correction amount on the basis of the integrated value. As still another example, a filter expressed by a transfer function that includes a great time constant may be used to calculate the correction amount. According to the above process, the gradual change of the correction amount can be realized. As mentioned above, if the correction amount is caused to be gradually changed, the change in the correction amount is small even in a case where the reference target engine rotation speed changes due to a change in the accelerator operation amount. Therefore, the final target engine rotation speed also changes by an amount corresponding to the change in the reference target engine rotation speed.

The target transmission ratio calculation unit 13 calculates the target transmission ratio so that actual engine rotation speed reaches the final target engine rotation speed. In other words, the target transmission ratio calculation unit 13 calculates the target transmission ratio on the basis of the final target engine rotation speed and a rotation speed of the mechanism located further toward the downstream side than the CVT 5. The target transmission ratio calculation unit 13 in the present example calculates the target transmission ratio on the basis of the final target engine rotation speed and the vehicle speed detected by the sensor. For example, the target transmission ratio calculation unit 13 calculates the target transmission ratio on the basis of a value obtained by dividing the final target engine rotation speed by the vehicle speed and a deceleration ratio in the final deceleration mechanism 7. In a case where the transmission ratio calculated in this way exceeds an upper limit or a lower limit of transmission ratio of the CVT 5, the target transmission ratio calculation unit 13 sets the upper limit or the lower limit as the target transmission ratio.

As described above, the control device 10 includes the reference throttle opening calculation unit 14 and the target drive force calculation unit 15 (refer to Fig. 3). The reference throttle opening calculation unit 14 converts the accelerator operation amount detected by the sensor into a throttle opening (an angle of the throttle valve) by using a map or a relational expression which is stored in the storage device 10c in advance, and sets the result thereof as a reference throttle opening.

The target drive force calculation unit 15 calculates a target value for drive force of the vehicle, that is, the above-described target drive force on the basis of the accelerator operation amount (more specifically, the reference throttle opening). In the example described here, the target drive force is, for example, torque of the rear wheel 8 or power of the rear wheel 8 (a torque × a rotation speed of the rear wheel 8). As illustrated in Fig. 3, the target drive force calculation unit 15 includes a reference target drive force calculation portion 15A and a correction portion 15B.

The reference target drive force calculation portion 15A calculates the reference target drive force on the basis of the reference throttle opening and the engine rotation speed obtained by using the above-described basic information. The reference target drive force is a target value which is input to the correction portion 15B which will be described later. The reference target drive force calculation portion 15A calculates the reference target drive force on the basis of, for example, the reference throttle opening, and the reference target engine rotation speed obtained by referring to the first basic information and the second basic information. This process is performed as follows, for example.

As an example, an engine torque map which correlates engine rotation speed, throttle opening, and engine torque with each other is stored in the storage device 10c in advance. The reference target drive force calculation portion 15A calculates an engine torque (this engine torque is referred to as reference target engine torque) corresponding to the reference target engine rotation speed and the reference throttle opening by referring to the engine torque map. As another example, the reference target drive force calculation portion 15A may use a map which correlates engine rotation speed, throttle opening, and engine power with each other, instead of the engine torque map, and may calculate an engine power (this engine power is referred to as reference target engine power) corresponding to the reference target engine rotation speed and the reference throttle opening by using the map.

The reference target drive force calculation portion 15A converts the calculated reference target engine torque or reference target engine power into a torque of the rear wheel 8 or a power of the rear wheel 8 and sets the result thereof as the reference target drive force. For example, in a case where a target value for torque of the rear wheel 8 is set as the target drive force, the reference target drive force calculation portion 15A calculates an inertial torque of the engine 4 on the basis of a change speed of the reference target engine rotation speed. The inertial torque is subtracted from reference engine torque (the reference engine torque - the inertial torque), and the subtraction result is set as the reference target drive force. Further, in a case where target value for a power of the rear wheel 8 is defined as the target drive force, the reference target drive force calculation portion 15A subtracts, from the reference engine power, a change in power caused by the inertial torque (the reference engine torque - the amount of change in power caused by the inertial torque), and sets the subtraction result as the reference target drive force. Alternatively, the subtraction of the inertial torque or the change in power caused by the inertial torque may not necessarily be performed.

Furthermore, the reference target drive force calculation portion 15A may subtract a torque which is lost in the CVT 5 or subtract a loss of power caused by the lost torque. Then, the subtraction result may be set as the reference target drive force. The torque lost in the CVT 5 is caused by, for example, torque for rotating the belt of the CVT 5. The torque lost in the CVT 5 may be calculated on the basis of rotation speed of the output shaft of the CVT 5 and engine torque.

Calculation of the reference target drive force is not limited to the above description. For example, the reference target drive force may be calculated on the basis of the first basic engine rotation speed or the second basic engine rotation speed instead of the reference target engine rotation speed. For example, the reference target drive force calculation portion 15A may calculate an engine torque corresponding to the first basic engine rotation speed and the reference throttle opening as the reference engine torque by referring to the engine torque map, and may calculate the reference target drive force by using the reference engine torque.

The correction portion 15B sets the reference target drive force as the target drive force in a case where the drive force correction is not performed. On the other hand, in a case where the drive force correction is performed, the correction portion 15B sets a value obtained by correcting the reference target drive force as the target drive force. Specifically, the correction portion 15B adds a correction value to the reference target drive force and/or multiplies a correction value by the reference target drive force, and sets the calculation result as the target drive force.

As an example of the correction, in a case where the vehicle is traveling on an uphill road, the correction portion 15B calculates a traveling load applied to the vehicle, and adds a correction value corresponding to the traveling load to the reference target drive force or multiplies a correction value corresponding to the traveling load by the reference target drive force. As described about the process performed by the driving intention acquisition unit 17, the traveling load may be calculated on the basis of, for example, an engine torque which is calculated by using an engine rotation speed and a throttle opening, a change speed of the engine rotation speed, and a vehicle speed.

As another example of the correction, in a case where the reference target drive force increases, that is, in a case where the vehicle is accelerated, the correction portion 15B makes the target drive force greater than the reference target drive force, or makes an increase speed of the target drive force slower than an increase speed of the reference target drive force. Alternatively, in a case where the reference target drive force increases and then decreases, the correction portion 15B may make a decrease speed of the target drive force slower than a decrease speed of the reference target drive force. Such a correction to the target drive force can be realized by applying, for example, a filter expressed by a transfer function including a proportional element or a primary delay element, to the reference target drive force. Since this correction is performed, it is possible to improve a sense of acceleration of the vehicle.

The target throttle opening calculation unit 16 calculates the target throttle opening on the basis of the target drive force and the final target engine rotation speed so that drive force of the vehicle reaches the target drive force, while driving the engine 4 at the final target engine rotation speed. The target throttle opening calculation unit 16 of the present example illustrated in Fig. 3 includes a target engine torque calculation portion 16A and a throttle opening calculation portion 16B. The target engine torque calculation portion 16A converts the target drive force which is a target value for torque or a power of the rear wheel 8 into a target for engine torque (that is, target engine torque) by using the final target engine rotation speed. The throttle opening calculation portion 16B calculates the target throttle opening on the basis of the target engine torque and the final target engine rotation speed.

The target engine torque calculation portion 16A calculates inertial torque of the engine 4 on the basis of, for example, a change speed of the final target engine rotation speed, and converts the target drive force into a target engine torque on the basis of the inertial torque, a torque lost in the CVT 5, and the final target engine rotation speed. Specifically, in a case where the target drive force is defined as target value for torque of the rear wheel 8, the target engine torque calculation portion 16A adds, in contrast to the reference target drive force calculation portion 15A, the inertial torque and the torque lost in the CVT 5 to the target drive force and sets the result thereof as the target engine torque. In a case where the target drive force is defined as target value for power of the rear wheel 8, the target engine torque calculation portion 16A adds, for example, a change amount of power caused by the inertial torque and a loss of power caused by torque lost in the CVT 5 to the target drive force, and calculates the target engine torque on the basis of the addition result (a target engine power) and the final target engine rotation speed.

The throttle opening calculation portion 16B calculates the target throttle opening on the basis of the target engine torque. Specifically, the throttle opening calculation portion 16B refers to the map which correlates engine torque, throttle opening, and engine rotation speed with each other, calculates the throttle opening corresponding to the target engine torque and the final target engine rotation speed, and sets the throttle opening as the target throttle opening.

The process performed by the target throttle opening calculation unit 16 is not limited to the above description. For example, the target throttle opening calculation unit 16 may calculate the target engine power on the basis of the target drive force, and the throttle opening calculation portion 16B may calculate a target throttle opening on the basis of the target engine power. In this case, the storage device 10c stores a map which correlates engine power, throttle opening, and engine rotation speed with each other. In addition, the throttle opening calculation portion 16B refers to this map, and calculates the target throttle opening on the basis of the target engine power and the target engine rotation speed.

As described above, in a case where the rotation speed correction is performed, the target engine rotation speed calculation unit 12 calculates the best fuel consumption engine rotation speed, and sets the final target engine rotation speed on the basis of the best fuel consumption engine rotation speed and the reference target engine rotation speed. In a case where the rotation speed correction is performed, calculation of the best fuel consumption engine rotation speed is performed by using, for example, the target drive force calculated by the target drive force calculation unit 15. For example, the storage device 10c stores a relationship (that is, a map which defines the best fuel consumption curve) between power of the rear wheel 8 and the best fuel consumption engine rotation speed. In a case where target drive force is defined as target value for power of the rear wheel 8, the target engine rotation speed calculation unit 12 refers to the map, and calculates the best fuel consumption engine rotation speed corresponding to the target drive force calculated by the target drive force calculation unit 15. Alternatively, in a case where the target drive force is defined as target value for torque of the rear wheel 8, the target engine rotation speed calculation unit 12 multiplies, for example, a rotation speed of the rear wheel 8 by the target drive force, and calculates the best fuel consumption engine rotation speed corresponding to the multiplication result by referring to the map defining the best fuel consumption curve.

In the above-described control device 10, the first basic engine rotation speed calculation part 12a calculates the first engine rotation speed on the basis of the first basic information which defines engine rotation speed in the first driving mode (for example, the above-described low fuel consumption mode). The second basic engine rotation speed calculation part 12b calculates the second engine rotation speed on the basis of the second basic information which defines engine rotation speed in the second driving mode (for example, the above-described acceleration responsiveness mode). The driving intention acquisition unit 17 acquires the driving intention value which is a numerical value indicating a driving intention of driver. The target engine rotation speed calculation unit 12 calculates the target engine rotation speed (in the above description, the final target engine rotation speed) on the basis of an engine rotation speed (in the above description, the reference target engine rotation speed) which is calculated between the first engine rotation speed and the second engine rotation speed and and which corresponds to the driving intention value. The target transmission ratio calculation unit 13 calculates the target transmission ratio of the CVT 5 on the basis of the final target engine rotation speed. The throttle opening calculation portion 16B calculates the target throttle opening on the basis of the target drive force which is calculated by using the accelerator operation amount detected by the sensor and the final target engine rotation speed.

According to the control device 10, in contrast to the control of the related art, a target engine rotation speed is first calculated, and then a target value for drive force is calculated. For this reason, it is possible to reduce an influence of the target value for drive force of vehicle to the target engine rotation speed. As a result, it becomes easier to control engine rotation speed so that a comfortable riding feeling can be obtained. In addition, since a driving intention value is used to calculate the target engine rotation speed, it is possible to realize an engine rotation speed suitable for a driving intention of driver. For example, engine rotation speed defined by the second basic information is defined to realize more favorable acceleration responsiveness than engine rotation speed defined by the first basic information as described above. In this example, in a case where driver desires traveling with good acceleration responsiveness, the target engine rotation speed (specifically, a reference target engine rotation speed) may be set to a rotation speed close to the second engine rotation speed which is obtained by using the second basic information.

The present invention is not limited to the above-described control device 10, and may have various modifications within the scope defined by the appended claims.

For example, in a situation in which the vehicle is turning, the control device 10 restricts a change in driving intention value. However, the restriction of change in driving intention value may not necessarily be performed.

Further, the control device 10 can perform both of the rotation speed correction and the drive force correction. However, the control device 10 may only perform either the rotation speed correction or the drive force correction. Still further, the control device 10 may perform neither the rotation speed correction nor the drive force correction. In other words, the target drive force calculation unit 15 may not necessarily include the correction portion 15B. Furthermore, the target engine rotation speed calculation unit 12 may not necessarily include the correction portion 12B.

Moreover, in the above description, the target drive force and the reference target drive force are defined as target power for the rear wheel 8 or target torque of the rear wheel 8. However, the forces may be target engine power, and may be acceleration of the vehicle.

In addition, in the above description, a target engine rotation speed output by the correction portion 12B is referred to as final target engine rotation speed, but the final target engine rotation speed may be further corrected, and the target transmission ratio or the like may be calculated on the basis of the corrected target engine rotation speed.

**Claims**

1. A control device (10) for a vehicle, adapted to electronically control a transmission ratio of a continuously variable transmission (5) and a throttle opening by using actuators (23,25), the control device comprising:

   a storage device (10c) configured to store in advance first basic information that defines engine rotation speed in a first driving mode of the vehicle and second basic information that defines engine rotation speed in a second driving mode of the vehicle, wherein at least one of the first basic information and the second basic information is a map which associates engine rotation speed and accelerator operation amount with information regarding vehicle speed;
   a first basic engine rotation speed calculation unit (12a) configured to calculate an engine rotation speed obtained from the first basic information as a first engine rotation speed;
   a second basic engine rotation speed calculation unit (12b) configured to calculate an engine rotation speed obtained from the second basic information as a second engine rotation speed;
   a driving intention acquisition unit (17) configured to acquire a driving intention value which is a numerical value indicating a driving intention of driver;
   a target engine rotation speed calculation unit (12) configured to calculate a target engine rotation speed, on the basis of an engine rotation speed which is calculated between the first engine rotation speed and the second engine rotation speed and corresponds to the driving intention value;
   a target transmission ratio calculation unit (13) configured to calculate the target transmission ratio of the continuously variable transmission (5) on the basis of the target engine rotation speed;
   **characterized in that** the control device further comprises
   a target drive force calculation unit (15) configured to calculate a target value related to drive force of the vehicle, on the basis of an accelerator operation amount detected by a sensor (24) and the target engine rotation speed; and
   a target throttle opening calculation unit (16) configured to calculate a target throttle opening, on the basis of the target value and the target engine rotation speed, so that a drive force corresponding to the target value can be obtained.

2. The control device (10) according to claim 1,
   wherein the driving intention acquisition unit (17) is configured to calculate the driving intention value on the basis of a driving state of the vehicle.

3. The control device (10) according to claim 1 or 2,
   wherein the target engine rotation speed calculation (12) unit is configured to correct the engine rotation speed corresponding to the driving intention value, and to then calculate the corrected engine rotation speed as the target engine rotation speed.

4. The control device (10) according to claim 1,

   wherein the first basic information is configured such that it correlate accelerator operation amount with engine rotation speed in the first driving mode,
   wherein the second basic information is configured such that it correlate accelerator operation amount with engine rotation speed in the second driving mode,
   wherein the first basic engine rotation speed calculation unit (12a) is configured to refer to the first basic information, and to calculate the first engine rotation speed on the basis of the accelerator operation amount detected by the sensor, and
   wherein the second basic engine rotation speed calculation unit (12b) is configured to refer to the second basic information, and to calculate the second engine rotation speed on the basis of the accelerator operation amount detected by the sensor.

5. The control device (10) according to any one of claims 1 to 4,
   wherein the driving intention acquisition unit (17) is configured to restrict change in the driving intention value in a case where the vehicle is in a predefined traveling situation.

6. The control device (10) according to claim 5,

   wherein the predefined traveling situation is a traveling situation in which a request for acceleration from driver is estimated to be increased, and

wherein the driving intention acquisition unit (17) is configured to restrict change in the driving intention value so that the engine rotation speed corresponding to the driving intention value is prevented from being reduced, in the traveling situation in which a request for acceleration from driver is estimated to be increased.

7. The control device (10) according to claim 5 or 6,
wherein the predefined traveling situation is a case where the vehicle is traveling on a curved road, a case where a brake device is working, or a case where the vehicle is traveling on an uphill road.

8. A motorcycle (1) comprising the control device (10) according to any one of claims 1 to 7.

9. A control method for a vehicle, which electronically controls a transmission ratio of a continuously variable transmission (5) and a throttle opening by using actuators (23,25), the control method comprising:

storage in advance within a storage device (10c) of first basic information that defines engine rotation speed in a first driving mode of the vehicle and second basic information that defines engine rotation speed in a second driving mode of the vehicle, wherein at least one of the first basic information and the second basic information is a map which associates engine rotation speed and accelerator operation amount with information regarding vehicle speed;

calculation by a first basic engine rotation speed calculation unit (12a) of an engine rotation speed obtained from the first basic information as a first engine rotation speed;

calculation by a second basic engine rotation speed calculation unit (12b) of an engine rotation speed obtained from the second basic information as a second engine rotation speed;

acquisition by a driving intention acquisition unit (17) of a driving intention value which is a numerical value indicating a driving intention of driver;

calculation by a target engine rotation speed calculation unit (12) of a target engine rotation speed, on the basis of an engine rotation speed which is calculated between the first engine rotation speed and the second engine rotation speed and corresponds to the driving intention value;

calculation by a target transmission ratio calculation unit (13) of a target transmission ratio of the continuously variable transmission (5) on the basis of the target engine rotation speed;

**characterized in that** the control method further comprises

calculation by a target drive force calculation unit (15) of a target value related to drive force of the vehicle, on the basis of an accelerator operation amount detected by a sensor (24) and the target engine rotation speed; and

calculation by a target throttle opening calculation unit (16) of a target throttle opening, on the basis of the target value and the target engine rotation speed, so that a drive force corresponding to the target value can be obtained.

10. The control method according to claim 9,
wherein the driving intention acquisition unit (17) calculates the driving intention value on the basis of a driving state of the vehicle.

11. The control method according to claim 9 or 10,
wherein the target engine rotation speed calculation (12) unit corrects the engine rotation speed corresponding to the driving intention value, and then calculates the corrected engine rotation speed as the target engine rotation speed.

12. The control method according to claim 9,

wherein the first basic information correlates accelerator operation amount with engine rotation speed in the first driving mode,

wherein the second basic information correlates accelerator operation amount with engine rotation speed in the second driving mode,

wherein the first basic engine rotation speed calculation unit (12a) refers to the first basic information, and calculates the first engine rotation speed on the basis of the accelerator operation amount detected by the sensor, and

wherein the second basic engine rotation speed calculation unit (12b) refers to the second basic information, and calculates the second engine rotation speed on the basis of the accelerator operation amount detected by the sensor.

**13.** The control method according to any one of claims 9 to 12,
wherein the driving intention acquisition unit (17) restricts change in the driving intention value in a case where the vehicle is in a predefined traveling situation.

**14.** The control method according to claim 13,

wherein the predefined traveling situation is a traveling situation in which a request for acceleration from driver is estimated to be increased, and
wherein the driving intention acquisition unit (17) restricts change in the driving intention value so that the engine rotation speed corresponding to the driving intention value is prevented from being reduced, in the traveling situation in which a request for acceleration from driver is estimated to be increased.

**15.** The control method according to claim 13 or 14,
wherein the predefined traveling situation is a case where the vehicle is traveling on a curved road, a case where a brake device is working, or a case where the vehicle is traveling on an uphill road.

**Patentansprüche**

**1.** Steuerungsvorrichtung (10) für ein Fahrzeug, die so eingerichtet ist, dass sie ein Übersetzungsverhältnis eines stufenlosen Getriebes (5) und eine Drosselklappenöffnung unter Einsatz von Stellgliedern (23, 25) elektronisch steuert, wobei die Steuerungsvorrichtung umfasst:

eine Speicherungsvorrichtung (10c), die so ausgeführt ist, dass sie im Voraus eine erste Basisinformation, die die Motordrehzahl in einem ersten Fahrmodus des Fahrzeugs definiert, sowie eine zweite Basisinformation speichert, die die Motordrehzahl in einem zweiten Fahrmodus des Fahrzeugs definiert, wobei die erste Basisinformation oder/und die zweite Basisinformation ein Kennfeld ist/sind, das eine Motordrehzahl und ein Gaspedal-Betätigungsmaß mit Informationen bezüglich einer Fahrzeuggeschwindigkeit verknüpft;
eine erste Einheit (12a) für Berechnung einer Basis-Motordrehzahl, die so ausgeführt ist, dass sie eine anhand der ersten Basisinformation ermittelte Motordrehzahl als eine erste Motordrehzahl berechnet;
eine zweite Einheit (12b) für Berechnung einer Basis-Motordrehzahl, die so ausgeführt ist, dass sie eine anhand der zweiten Basisinformation ermittelte Motordrehzahl als eine zweite Motordrehzahl berechnet;
eine Einheit (17) für Erfassung einer Fahr-Absicht, die so ausgeführt ist, dass sie einen Wert einer Fahr-Absicht erfasst, der ein numerischer Wert ist, der eine Fahr-Absicht eines Fahrers anzeigt;
eine Einheit (12) für Berechnung einer Soll-Motordrehzahl, die so ausgeführt ist, dass sie eine Soll-Motordrehzahl auf Basis einer Motordrehzahl berechnet, die zwischen der ersten Motordrehzahl und der zweiten Motordrehzahl berechnet wird und dem Wert einer Fahr-Absicht entspricht;
eine Einheit (13) für Berechnung eines Soll-Übersetzungsverhältnisses, die so ausgeführt ist, dass sie das Soll-Übersetzungsverhältnis des stufenlosen Getriebes (5) auf Basis der Soll-Motordrehzahl berechnet;
**dadurch gekennzeichnet, dass** die Steuerungsvorrichtung des Weiteren umfasst:

eine Einheit (15) für Berechnung einer Soll-Antriebskraft, die so ausgeführt ist, dass sie einen Sollwert bezüglich einer Antriebskraft des Motors auf Basis eines durch einen Sensor (24) erfassten Gaspedal-Betätigungsmaßes und der Soll-Motordrehzahl berechnet; sowie
eine Einheit (16) für Berechnung einer Soll-Drosselklappenöffnung, die so ausgeführt ist, dass sie eine Soll-Drosselklappenöffnung auf Basis des Sollwertes und der Soll-Motordrehzahl so berechnet, dass eine dem Sollwert entsprechende Antriebskraft erreicht werden kann.

**2.** Steuerungsvorrichtung (10) nach Anspruch 1,
wobei die Einheit (17) für Erfassung einer Fahr-Absicht so ausgeführt ist, dass sie den Wert einer Fahr-Absicht auf Basis eines Fahrzustandes des Fahrzeugs berechnet.

**3.** Steuerungsvorrichtung (10) nach Anspruch 1 oder 2,
wobei die Einheit (12) für Berechnung einer Soll-Motordrehzahl so ausgeführt ist, dass sie die Motordrehzahl entsprechend dem Wert einer Fahr-Absicht korrigiert und dann die korrigierte Motordrehzahl als die Soll-Motordrehzahl berechnet.

**4.** Steuerungsvorrichtung (10) nach Anspruch 1,

wobei die erste Basisinformation so ausgeführt ist, dass sie das Gaspedal-Betätigungsmaß mit der Motordrehzahl in dem ersten Fahrmodus korreliert,

die zweite Basisinformation so ausgeführt ist, dass sie das Gaspedal-Betätigungsmaß mit der Motordrehzahl in dem zweiten Fahrmodus korreliert,

die erste Einheit (12a) für Berechnung einer Basis-Motordrehzahl so ausgeführt ist, dass sie auf die erste Basisinformation Bezug nimmt und die erste Motordrehzahl auf Basis des durch den Sensor erfassten Gaspedal-Betätigungsmaßes berechnet, und

die zweite Einheit (12b) für Berechnung einer Basis-Motordrehzahl so ausgeführt ist, dass sie auf die zweite Basisinformation Bezug nimmt und die zweite Motordrehzahl auf Basis des durch den Sensor erfassten Gaspedal-Betätigungsmaßes berechnet.

5. Steuerungsvorrichtung (10) nach einem der Ansprüche 1 bis 4,
wobei die Einheit (17) für Erfassung einer Fahr-Absicht so ausgeführt ist, dass sie Änderung des Wertes einer Fahr-Absicht in einem Fall beschränkt, in dem sich das Fahrzeug in einer vordefinierten Fahrsituation befindet.

6. Steuerungsvorrichtung (10) nach Anspruch 5,

wobei die vordefinierte Fahrsituation eine Fahrsituation ist, in der eingeschätzt wird, dass eine Anforderung von Beschleunigung von einem Fahrer erhöht wird, und

wobei die Einheit (17) für Erfassung einer Fahr-Absicht so ausgeführt ist, dass sie Änderung des Wertes einer Fahr-Absicht so einschränkt, dass in der Fahrsituation, in der eingeschätzt wird, dass eine Anforderung von Beschleunigung von einem Fahrer erhöht wird, verhindert wird, dass die dem Wert einer Fahr-Absicht entsprechende Motordrehzahl reduziert wird.

7. Steuerungsvorrichtung (10) nach Anspruch 5 oder 6,
wobei die vordefinierte Fahrsituation ein Fall, in dem das Fahrzeug auf einer Straßenkurve fährt, ein Fall, in dem eine Bremsvorrichtung arbeitet, oder ein Fall ist, in dem das Fahrzeug auf einer aufwärts führenden Straße fährt.

8. Motorrad (1) das die Steuerungsvorrichtung (10) nach einem der Ansprüche 1 bis 7 umfasst.

9. Steuerungsverfahren für ein Fahrzeug, mit dem ein Übersetzungsverhältnis eines stufenlosen Getriebes (5) und eine Drosselklappenöffnung unter Verwendung von Stellgliedern (23, 25) elektronisch gesteuert werden, wobei das Steuerungsverfahren umfasst:

Speicherung einer ersten Basisinformation, die eine Motordrehzahl in einem ersten Fahrmodus des Fahrzeugs definiert, sowie einer zweiten Basisinformation, die eine Motordrehzahl in einem zweiten Fahrmodus des Fahrzeugs definiert, innerhalb einer Speicherungsvorrichtung (10c) im Voraus, wobei die erste Basisinformation oder/und die zweite Basisinformation ein Kennfeld ist/sind, das eine Motordrehzahl und ein Gaspedal-Betätigungsmaß mit Informationen bezüglich einer Fahrzeuggeschwindigkeit verknüpft;

Berechnung einer anhand der ersten Basisinformation ermittelten Motordrehzahl als eine erste Motordrehzahl durch eine erste Einheit (12a) für Berechnung einer Basis-Motordrehzahl;

Berechnung einer anhand der zweiten Basisinformation ermittelten Motordrehzahl als eine zweite Motordrehzahl durch eine zweite Einheit (12b) für Berechnung einer Basis-Motordrehzahl;

Erfassung eines Wertes einer Fahr-Absicht, der ein numerischer Wert ist, der eine Fahr-Absicht eines Fahrers anzeigt, durch eine Einheit (17) für Erfassung einer Fahr-Absicht;

Berechnung einer Soll-Motordrehzahl auf Basis einer Motordrehzahl, die zwischen der ersten Motordrehzahl und der zweiten Motordrehzahl berechnet wird und dem Wert einer Fahr-Absicht entspricht, durch eine Einheit (12) für Berechnung einer Soll-Motordrehzahl;

Berechnung eines Soll-Übersetzungsverhältnisses des stufenlosen Getriebes (5) auf Basis der Soll-Motordrehzahl durch eine Einheit (13) für Berechnung eines Soll-Übersetzungsverhältnisses;

**dadurch gekennzeichnet, dass** das Steuerungsverfahren des Weiteren umfasst:

Berechnung eines Sollwertes bezüglich einer Antriebskraft des Motors auf Basis eines durch einen Sensor (24) erfassten Gaspedal-Betätigungsmaßes und der Soll-Motordrehzahl durch eine Einheit (15) für Berechnung einer Soll-Antriebskraft; sowie

Berechnung einer Soll-Drosselklappenöffnung auf Basis des Sollwertes und der Soll-Motordrehzahl so, dass eine dem Sollwert entsprechende Antriebskraft erreicht werden kann, durch eine Einheit (16) für Berechnung einer Soll-Drosselklappenöffnung.

**10.** Steuerungsverfahren nach Anspruch 9,
wobei die Einheit (17) für Erfassung einer Fahr-Absicht den Wert einer Fahr-Absicht auf Basis eines Fahrzustandes des Fahrzeugs berechnet.

**11.** Steuerungsverfahren nach Anspruch 9 oder 10,
wobei die Einheit (12) für Berechnung einer Soll-Motordrehzahl die Motordrehzahl entsprechend dem Wert einer Fahr-Absicht korrigiert und dann die korrigierte Motordrehzahl als die Soll-Motordrehzahl berechnet.

**12.** Steuerungsverfahren nach Anspruch 9,

wobei die erste Basisinformation das Gaspedal-Betätigungsmaß mit der Motordrehzahl in dem ersten Fahrmodus korreliert,
die zweite Basisinformation das Gaspedal-Betätigungsmaß mit der Motordrehzahl in dem zweiten Fahrmodus korreliert,
die erste Einheit (12a) für Berechnung einer Basis-Motordrehzahl auf die erste Basisinformation Bezug nimmt und die erste Motordrehzahl auf Basis des durch den Sensor erfassten Gaspedal-Betätigungsmaßes berechnet, und
die zweite Einheit (12b) für Berechnung einer Basis-Motordrehzahl auf die zweite Basisinformation Bezug nimmt und die zweite Motordrehzahl auf Basis des durch den Sensor erfassten Gaspedal-Betätigungsmaßes berechnet.

**13.** Steuerungsverfahren nach einem der Ansprüche 9 bis 12,
wobei die Einheit (17) für Erfassung einer Fahr-Absicht Änderung des Wertes einer Fahr-Absicht in einem Fall beschränkt, in dem sich das Fahrzeug in einer vordefinierten Fahrsituation befindet.

**14.** Steuerungsverfahren nach Anspruch 13,

wobei die vordefinierte Fahrsituation eine Fahrsituation ist, in der eingeschätzt wird, dass eine Anforderung von Beschleunigung von einem Fahrer erhöht wird, und
die Einheit (17) für Erfassung einer Fahr-Absicht Änderung des Wertes einer Fahr-Absicht so einschränkt, dass in der Fahrsituation, in der eingeschätzt wird, dass eine Anforderung von Beschleunigung von einem Fahrer erhöht wird, verhindert wird, dass die dem Wert einer Fahr-Absicht entsprechende Motordrehzahl reduziert wird.

**15.** Steuerungsverfahren nach Anspruch 13 oder 14,
wobei die vordefinierte Fahrsituation ein Fall, in dem das Fahrzeug auf einer Straßenkurve fährt, ein Fall, in dem eine Bremsvorrichtung arbeitet, oder ein Fall ist, in dem das Fahrzeug auf einer aufwärts führenden Straße fährt.

**Revendications**

**1.** Dispositif de commande (10) destiné à un véhicule, conçu pour commander électroniquement le rapport de transmission d'une transmission à variation continue (5) et l'ouverture du papillon des gaz en utilisant des actionneurs (23, 25), le dispositif de commande comprenant :

un dispositif de stockage (10c) configuré pour stocker à l'avance des premières informations de base qui définissent le régime de rotation du moteur dans un premier mode de conduite du véhicule et des secondes informations de base qui définissent le régime de rotation du moteur dans un second mode de conduite du véhicule, au moins un type parmi les premières informations de base et les secondes informations de base étant une mappe qui associe le régime de rotation du moteur et la valeur de manœuvre de l'accélérateur à des informations se rapportant à la vitesse du véhicule,
une première unité de calcul de régime de rotation moteur de base (12a) configurée pour calculer en tant que premier régime de rotation moteur le régime de rotation du moteur obtenu à partir des premières informations de base,
une seconde unité de calcul de régime de rotation moteur de base (12b) configurée pour calculer en tant que second régime de rotation moteur le régime de rotation du moteur obtenu à partir des secondes informations de base,
une unité d'acquisition d'objectif de conduite (17) configurée pour acquérir une valeur d'objectif de conduite qui est une valeur numérique indiquant l'objectif de conduite du conducteur,

une unité de calcul de régime de rotation moteur cible (12) configurée pour calculer un régime de rotation de moteur cible sur la base de régime de rotation moteur qui est calculé entre le premier régime de rotation moteur et le second régime de rotation moteur et qui correspond à la valeur d'objectif de conduite,
une unité de calcul de rapport de transmission cible (13) configurée pour calculer le rapport de transmission cible de la transmission à variation continue (5) sur la base du régime de rotation moteur cible,
**caractérisé en ce que** le dispositif de commande comprend en outre :

une unité de calcul de force d'entraînement cible (15) configurée pour calculer une valeur cible se rapportant à la force d'entraînement du véhicule sur la base de la valeur de manœuvre d'accélérateur détectée par un capteur (24) et du régime de rotation moteur cible, et
une unité de calcul d'ouverture de papillon des gaz cible (16) configurée pour calculer l'ouverture du papillon des gaz cible sur la base de la valeur cible et du régime de rotation moteur cible de sorte à obtenir une force d'entraînement correspondant à la valeur cible.

2. Dispositif de commande (10) selon la revendication 1,
dans lequel l'unité d'acquisition d'objectif de conduite (17) est configurée pour calculer la valeur d'objectif de conduite sur la base de l'état de conduite du véhicule.

3. Dispositif de commande (10) selon la revendication 1 ou la revendication 2,
dans lequel l'unité de calcul de régime de rotation moteur cible (12) est configurée pour corriger le régime de rotation moteur correspondant à la valeur d'objectif de conduite puis de calculer le régime de rotation moteur corrigé en tant que régime de rotation moteur cible.

4. Dispositif de commande (10) selon la revendication 1,

dans lequel les premières informations de base sont configurées de sorte à corréler la valeur de manœuvre d'accélérateur au régime de rotation moteur dans le premier mode de conduite,
dans lequel les secondes informations de base sont configurées de sorte à corréler la valeur de manœuvre d'accélérateur au régime de rotation moteur dans le second mode de conduite,
dans lequel la première unité de calcul de régime de rotation moteur de base (12a) est configurée pour faire référence aux premières informations de base et pour calculer le premier régime de rotation moteur sur la base de la valeur de manœuvre d'accélérateur détectée par le capteur, et
dans lequel la seconde unité de calcul de régime de rotation moteur de base (12b) est configurée pour faire référence aux secondes informations de base et pour calculer le second régime de rotation moteur sur la base de la valeur de manœuvre d'accélérateur détectée par le capteur.

5. Dispositif de commande (10) selon l'une quelconque des revendications 1 à 4,
dans lequel l'unité d'acquisition d'objectif de conduite (17) est configurée pour limiter une modification de la valeur d'objectif de conduite dans le cas où le véhicule se trouve dans une situation prédéfinie de déplacement.

6. Dispositif de commande (10) selon la revendication 5,

dans lequel la situation prédéfinie de déplacement est une situation de déplacement dans laquelle il est estimé que la demande d'accélération émise par le conducteur est augmentée, et
dans lequel l'unité d'acquisition d'objectif de conduite (17) est configurée pour limiter une modification de la valeur d'objectif de conduite de sorte à empêcher la diminution du régime de rotation moteur correspondant à la valeur d'objectif de conduite dans la situation de déplacement dans laquelle il est estimé que la demande d'accélération émise par le conducteur est augmentée.

7. Dispositif de commande (10) selon la revendication 5 ou la revendication 6,
dans lequel la situation prédéfinie de déplacement est un cas dans lequel le véhicule se déplace sur une route en virage, un cas dans lequel un frein travaille ou un cas dans lequel le véhicule circule sur une route en montée.

8. Motocycle (1) comprenant le dispositif de commande (10) conforme à l'une quelconque des revendications 1 à 7.

9. Procédé de commande pour un véhicule qui commande électroniquement le rapport de transmission d'une transmission à variation continue (5) et l'ouverture du papillon des gaz en utilisant des actionneurs (23, 25), le procédé de commande comprenant :

le stockage à l'avance dans un dispositif de stockage (10c) de premières informations de base qui définissent le régime de rotation du moteur dans un premier mode de conduite du véhicule et de secondes informations de base qui définissent le régime de rotation du moteur dans un second mode de conduite du véhicule, au moins un type parmi les premières informations de base et les secondes informations de base étant une mappe qui associe le régime de rotation du moteur et la valeur de manœuvre de l'accélérateur à des informations se rapportant à la vitesse du véhicule,

le calcul en tant que premier régime de rotation moteur par une première unité de calcul de régime de rotation moteur de base (12a) d'un régime de rotation du moteur obtenu à partir des premières informations de base,

le calcul en tant que second régime de rotation moteur par une seconde unité de calcul de régime de rotation moteur de base (12b) d'un régime de rotation du moteur obtenu à partir des secondes informations de base,

l'acquisition par une unité d'acquisition d'objectif de conduite (17) d'une valeur d'objectif de conduite qui est une valeur numérique indiquant l'objectif de conduite du conducteur,

le calcul par une unité de calcul de régime de rotation moteur cible (12) d'un régime de rotation de moteur cible sur la base de régime de rotation moteur qui est calculé entre le premier régime de rotation moteur et le second régime de rotation moteur et qui correspond à la valeur d'objectif de conduite,

le calcul par une unité de calcul de rapport de transmission cible (13) du rapport de transmission cible de la transmission à variation continue (5) sur la base du régime de rotation moteur cible,

**caractérisé en ce que** le procédé de commande comprend en outre :

le calcul par une unité de calcul de force d'entraînement cible (15) d'une valeur cible se rapportant à la force d'entraînement du véhicule sur la base de la valeur de manœuvre d'accélérateur détectée par un capteur (24) et du régime de rotation moteur cible, et

le calcul par une unité de calcul d'ouverture de papillon des gaz cible (16) de l'ouverture du papillon des gaz cible sur la base de la valeur cible et du régime de rotation moteur cible de sorte à obtenir une force d'entraînement correspondant à la valeur cible.

10. Procédé de commande selon la revendication 9,
dans lequel l'unité d'acquisition d'objectif de conduite (17) calcule la valeur d'objectif de conduite sur la base de l'état de conduite du véhicule.

11. Procédé de commande selon la revendication 9 ou la revendication 10,
dans lequel l'unité de calcul de régime de rotation moteur cible (12) corrige le régime de rotation moteur correspondant à la valeur d'objectif de conduite puis calcule le régime de rotation moteur corrigé en tant que régime de rotation moteur cible.

12. Procédé de commande selon la revendication 9,

dans lequel les premières informations de base corrèlent la valeur de manœuvre d'accélérateur au régime de rotation moteur dans le premier mode de conduite,

dans lequel les secondes informations de base corrèlent la valeur de manœuvre d'accélérateur au régime de rotation moteur dans le second mode de conduite,

dans lequel la première unité de calcul de régime de rotation moteur de base (12a) fait référence aux premières informations de base et calcule le premier régime de rotation moteur sur la base de la valeur de manœuvre d'accélérateur détectée par le capteur, et

dans lequel la seconde unité de calcul de régime de rotation moteur de base (12b) fait référence aux secondes informations de base et calcule le second régime de rotation moteur sur la base de la valeur de manœuvre d'accélérateur détectée par le capteur.

13. Procédé de commande selon l'une quelconque des revendications 9 à 12,
dans lequel l'unité d'acquisition d'objectif de conduite (17) limite une modification de la valeur d'objectif de conduite dans le cas où le véhicule se trouve dans une situation prédéfinie de déplacement.

14. Procédé de commande selon la revendication 13,

dans lequel la situation prédéfinie de déplacement est une situation de déplacement dans laquelle il est estimé que la demande d'accélération émise par le conducteur est augmentée, et

dans lequel l'unité d'acquisition d'objectif de conduite (17) limite une modification de la valeur d'objectif de conduite de sorte à empêcher la diminution du régime de rotation moteur correspondant à la valeur d'objectif de conduite dans la situation de déplacement dans laquelle il est estimé que la demande d'accélération émise par le conducteur est augmentée.

15. Procédé de commande selon la revendication 13 ou la revendication 14, dans lequel la situation prédéfinie de déplacement est un cas dans lequel le véhicule se déplace sur une route en virage, un cas dans lequel un frein travaille ou un cas dans lequel le véhicule circule sur une route en montée.

FIG.1

# FIG.2

## FIG.3

EP 2 974 929 B1

# FIG.4

# FIG.5

FIRST ENGINE ROTATION SPEED MAP

(a)

SECOND ENGINE ROTATION SPEED MAP

(b)

# FIG.6

FIG.7

(a)

(b)

(c)

# FIG.8

(a)

ENGINE TORQUE

L3

A

P3

P2

P1

Th2

Th1

N3 N2 N1

ENGINE ROTATION SPEED

(b)

ENGINE TORQUE

L3 L4

A

P5

P6

Th6

P4

Th4

P1

Th1

N5 N6 N1

ENGINE ROTATION SPEED

**REFERENCES CITED IN THE DESCRIPTION**

**Patent documents cited in the description**

- JP 3754188 B
- WO 2012017709 A1
- WO 2011021089 A2
- WO 2012035401 A1
- EP 0602672 A1